# EUROPÄISCHE PATENTSCHRIFT

(11) **EP 1 731 374 B1**
(45) Veröffentlichungstag und Bekanntmachung des Hinweises auf die Patenterteilung: **11.11.2015**
(21) Anmeldenummer: 06011719.9
(22) Anmeldetag: 07.06.2006
(51) Int. Cl.: B60R 19/18, B60R 19/12

(54) **Fussgängerschutz bei geländegängigen Fahrzeugen durch Upper Support Structure**
Off-road vehicle bumper with "upper support structure" for pedestrian protection
Véhicule tout-terrain avec élément de pare-choc de type "upper support structure" destiné a protéger les piétons

(30) Priorität: 10.06.2005 DE 102005026868
(43) Veröffentlichungstag der Anmeldung: 13.12.2006
(73) Patentinhaber: GM Global Technology Operations LLC, Detroit, MI 48265-3000 (US)
(72) Erfinder: Kerkeling, Christoph, 55118 Mainz (DE)
(74) Vertreter: Daniel, Ulrich W.P.

(56) Entgegenhaltungen:
- EP-A- 1 118 530
- WO-A-03/013910
- WO-A-2006/035150
- DE-T2- 60 013 519

## Beschreibung

Die vorliegende Erfindung betrifft die Frontpartie eines Kraftfahrzeugs, insbesondere eines geländegängigen Fahrzeugs wie etwa eines SUV (Sports Utility Vehicle) oder allgemein eines Fahrzeugs mit hoher Bodenfreiheit und einem großen Rampenwinkel an der Vorderachse.

Demnächst in Kraft tretende verschärfte gesetzliche Bestimmungen zum Fußgängerschutz bei Kraftfahrzeugunfällen sehen Grenzwerte für Beschleunigung, Knie-Biegewinkel und Schubverformung eines als Beinimpaktor bezeichneten Prüfkörpers vor, die bei einem normierten, eine Unfallsituation simulierenden Aufprall des Prüfkörpers auf die Frontpartie eines Kraftfahrzeugs nicht überschritten werden dürfen. Um diese Anforderungen erfüllen zu können, ist vorgeschlagen worden, die Außenhaut der Frontpartie in einem Bereich unterhalb des Stoßfängerträgers zu versteifen. Eine solche Lösung ist jedoch nicht bei Fahrzeugen anwendbar, die, beispielsweise um geländegängig zu sein, einen großen Rampenwinkel und/oder ein hohes Maß an Bodenfreiheit benötigen.

WO 03/013910 offenbart ein Energieabsorberelement für eine Frontpartie eines Kraftfahrzeugs mit einer unteren, für den Kontakt mit einem Unterschenkel eines Fußgängers vorgesehenen Zone aus einem Schaummaterial mittlerer Dichte. Eine darüberliegende Zone hat eine äußere Schicht aus einem Schaummaterial niedriger Dichte.

Aufgabe der Erfindung ist, eine Frontpartie für ein Kraftfahrzeug anzugeben, die es ermöglicht, die an einem Beinimpaktor bei einem Aufprall auftretenden Werte

von für eventuelle Verletzungen eines Fußgängers relevanten Parametern niedrig zu halten, ohne die Bodenfreiheit des Fahrzeuges zu beeinträchtigen.

Die Aufgabe wird dadurch gelöst, dass in einer Frontpartie für ein Kraftfahrzeug, die einen Stoßfängerträger und eine in Bezug auf den Stoßfängerträger verformbare Außenhaut umfasst, die Außenhaut in einem oberhalb des Stoßfängerträgers liegenden oberen Bereich einen höheren Verformungswiderstand aufweist als in einem in Höhe des Stoßfängerträgers liegenden unteren Bereich. Indem durch eine solche Konstruktion bei einem Unfall verstärkt Kräfte in den Oberschenkelbereich eines Fußgängers eingeleitet werden, ist es möglich, die empfindliche Knieregion zu schützen.

Um die Verformbarkeit der Außenhaut mit einem geeigneten Wert des Verformungswiderstandes sicherzustellen, ist vorzugsweise ein Energieabsorber hinter dem oberen Bereich der Außenhaut angeordnet, bei dem es sich insbesondere um einen Schaum handeln kann, mit dem die Außenhaut in dem oberen Bereich hinterfüllt ist.

Versuche haben gezeigt, dass der obere Bereich eine Höhe von 66 cm über dem Boden einschließen sollte, um dadurch Kräfte in den Impaktor knapp unterhalb des Schwerpunktes seines Oberschenkels einzuleiten, der sich in einer Höhe von 711 mm befindet.

Vorzugsweise ist die Außenhaut in Höhe des oberen Bereiches an einem Hilfsträger befestigt. Dies erlaubt es, auf versteifende Befestigungen in Höhe des unteren Bereiches vollständig oder weitgehend zu verzichten, so dass eine Nachgiebigkeit der Außenhaut in dem unteren Bereich vollständig oder teilweise auf eine Schwenkbewegung des unteren Bereiches um eine oberhalb verlaufende horizontale Achse zurückgehen kann.

Um eine gleichmäßige Steifigkeit des oberen Bereiches über die gesamte Breite der Frontpartie hinweg sicherzustellen, erstreckt sich der Hilfsträger vorzugsweise quer über die Frontpartie.

Ferner kann der Hilfsträger in Fahrtrichtung über den Stoßfängerträger vorspringend angeordnet sein, so dass bei einem Aufprall der Hilfsträger, der nachgiebiger als der Stoßfängerträger sein kann, beginnt, verformt zu werden, bevor es zum Kontakt mit dem Stoßfängerträger kommt, und so die Wucht die Aufpralls auf den Stoßfängerträger mindert.

Weitere Merkmale und Vorteile der Erfindung ergeben sich aus der nachfolgenden Beschreibung eines Ausführungsbeispiels unter Bezugnahme auf die beigefügten Figuren.
- Fig. 1: zeigt in einem schematischen Schnitt eine Versuchsanordnung mit einer Frontpartie eines Kraftfahrzeugs gemäß der vorliegenden Erfindung und einem Beinimpaktor 1 kurz vor dem Aufprall auf diese Frontpartie.
- Fig. 2: zeigt einen zu Fig. 1 analogen Schnitt durch eine Versuchsanordnung mit einer zweiten Ausgestaltung einer erfindungsgemäßen Frontpartie.

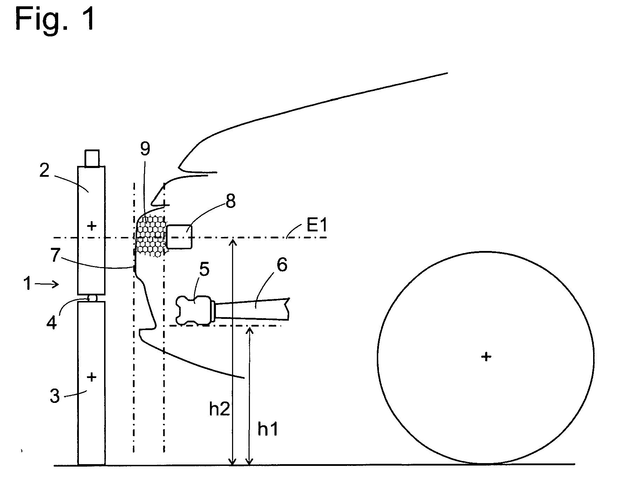

Der in Fig. 1 gezeigte Beinimpaktor 1 umfasst einen Oberschenkelabschnitt 2 und einen Unterschenkelabschnitt 3, die durch ein Kniegelenk 4 verbunden sind.

Die dem Impaktor 1 zugewandte Kraftfahrzeug-Frontpartie gehört zu einem SUV (Sports Utility Vehicle). Fahrzeuge dieses Typs weisen eine größere Bodenfreiheit auf als übliche Pkws. Ein Stoßfängerquerbalken 5 erstreckt sich quer zur Schnittebene über im Wesentlichen die gesamte Breite der Frontpartie und ist an einem starren Rahmen des Fahrzeugs über auch als Crash-Box bezeichnete, in Fahrzeuglängsrichtung orientierte hohle Träger 6 gehalten. Stoßfängerquerbalken 5 und Crash-Box 6 bilden eine Struktur, die bei einer Kollision mit einem anderen Fahrzeug verformbar ist und dabei Energie aufnimmt, die aber zu steif ist, um durch den Zusammenprall mit einem Fußgänger maßgeblich verformt zu werden.

Der Stoßfängerquerbalken 5 liegt bei einem SUV typischerweise höher als bei einem konventionellen PKW. Die Höhe des Stoßfängerquerbalkens 5 wird beim Konstruieren eines Fahrzeugtyps über den bekannten Pendeltest ECE R42 festgelegt. Im hier gezeigten Fall beträgt der Abstand h1 zwischen Boden und Unterkante des Stoßfängerquerbalkens 5 ca. 42 cm. Der Stoßfängerquerbalken 5 liegt daher nahezu in Höhe des Knies 4 des Impaktors 1.

Zum Fußgängerschutz ist daher vor dem Stoßfängerquerbalken 5 und beabstandet von diesem eine Stoßfänger-Außenhaut 7, zum Beispiel aus einem faserverstärkten Kunststoff, angeordnet, die leichter von Gewicht und leichter verformbar als der Querbalken 5 ist und dadurch beim Aufprall eines Fußgängers nachgeben kann. Die Stoßfänger-Außenhaut ist mit dem Stoßfänger-Querbalken 5 nicht direkt verbunden, sondern sie ist von einem Hilfsträger 8 getragen, der sich oberhalb des Stoßfänger-Querbalkens parallel zu diesem erstreckt und seinerseits an dem starren Rahmen befestigt ist. Die Befestigung der Außenhaut 7 an dem Hilfsträger 8 kann insbesondere mit Hilfe einer Füllung aus Schaum 9 bewerkstelligt sein, die in einen Zwischenraum zwischen dem Hilfsträger 8 und der Außenhaut 7 angeordnet ist. Eine Mittelebene E1 des Hilfsträgers 8 und der Schaumfüllung 9 befindet sich in einer Höhe h2 von ca. 660 mm über dem Boden, geringfügig unterhalb des in der Figur durch ein Pluszeichen bezeichneten Schwerpunkts des Oberschenkelabschnitts 2 des Beinimpaktors 1. Gestalt und Aufbau des Beinimpaktors sind vorgeschrieben durch die Entscheidung der EU-Kommission vom 23. Dezember 2003 (Amtsblatt der EU, L31/21 vom 4.2.2004). Die Höhe seines Schwerpunktes liegt bei 711 mm über dem Boden.

Die Schaumfüllung 9 kann, ausreichende Festigkeit vorausgesetzt, zur Verbindung der Außenhaut 7 mit und Verankerung an dem Hilfsträger 8 dienen. Die Außenhaut 7 kann aber auch durch andere geeignete Mittel, die ihre Verformbarkeit nicht zweckwidrig beeinträchtigen, an dem Hilfsträger 8 gehalten sein.

Bei einem Aufprall des Impaktors 1 auf die Frontpartie wird Verformungsarbeit an dieser überwiegend in Höhe des Oberschenkelabschnitts 2 geleistet, da ein oberer Bereich der Außenhaut 7, auf den der Oberschenkelabschnitt 2 auftrifft, durch den durch den dahinter liegenden Schaum 9 und ggf. den Hilfsträger 8 schwerer zu verformen ist als der untere Bereich der Außenhaut 7 in Höhe des Querbalkens 5. Dieser untere Bereich gibt zwar nach, doch wird hierfür weniger Energie verbraucht als im oberen Abschnitt. Die beim Aufprall am Kniegelenk 4 des Impaktors gemessenen Kräfte sind deutlich geringer, als wenn eine Außenhaut von vergleichbarer Gestalt unmittelbar an dem Querbalken 5 abgestützt ist und die Verformungsarbeit deshalb im Wesentlichen in Höhe des Querbalkens geleistet werden muss.

Da der Hilfsträger 8 nicht in dem gleichen Maße wie der Querbalken 5 benötigt wird, um Energie beim Zusammenprall von zwei Fahrzeugen zu dissipieren, ist er nachgiebiger und mit einem geringeren Gewicht pro Längeneinheit als der Querbalken 5 gefertigt. Dies begünstigt bei einem Zusammenprall mit einem Fußgänger die Impulsübertragung auf den Hilfsträger 8 und damit auch dessen Verformung. Da der Hilfsträger 8 weiter in Fahrtrichtung des Fahrzeugs vorsteht als der Querbalken 5, wird er zwar bei einem Fußgängerunfall früher als der Querbalken 5 verformt, kann aber weiter als letzterer nachgeben, so dass sich an der Fahrzeugfront eine schräg nach oben gerichtete Rampe bilden kann, die es dem Fußgänger ermöglicht, in ähnlicher Weise wie bei einer Frontpartie eines herkömmlichen Pkw, die im Allgemeinen tiefer liegt als die eines SUV, auf die Fronthaube aufzugleiten und so das Verletzungsrisiko zu verringern.

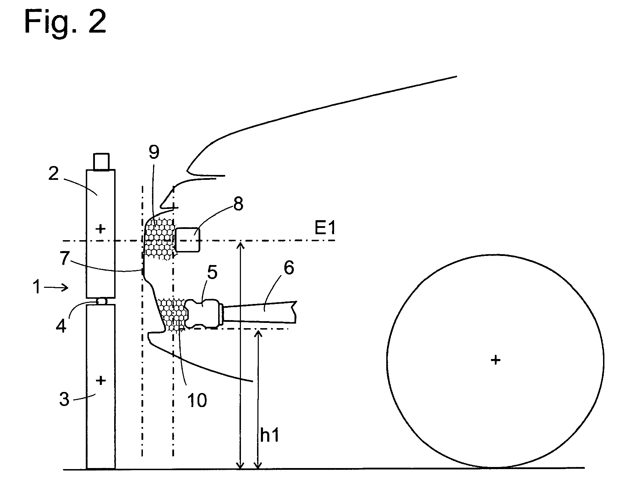

Um die Nachgiebigkeit der Stoßfängeraußenhaut 7 auch in ihrem unteren Bereich zu optimieren und zu verhindern, dass sie bei einem Zusammenstoß ohne nennenswerten Widerstand nachgibt und der Unterschenkel im Abschnitt 2 im Wesentlichen ungebremst auf den Stoßfängerquerbalken 5 trifft, kann, wie in der Ausgestaltung der Figur 2 gezeigt, auch zwischen dem Querbalken 5 und der Außenhaut 7 eine energiedissipierende Struktur wie etwa eine Lage aus Schaum 10 angeordnet sein. Um trotz einer solchen Struktur den Verformungswiderstand der Außenhaut 7 in Höhe des Hilfsträgers 8 höher zu halten als in Höhe des Querbalkens 5, kann ist der Schaum 9 mit einer Dichte von ca. 50 bis 80 g/l, vorzugsweise ca. 55 bis 60 g/l, weniger stark expandiert als der Schaum 10. Alternativ kann eine höher mittlere Dichte des Schaums 9 dadurch erzielt werden, dass die Schaumkörper zwar mit gleicher Dichte erzeugt werden, in den Schaum 10 aber nachträglich Aussparungen geschnitten werden, die ihn leichter verformbar machen. Eine weitere Möglichkeit, die Außenhaut 7 in Höhe des Stoßfängerquerbalkens 5 leichter verformbar zu machen als in Höhe des Hilfsträgers 8, ist, den Schaum 10 einfach mit einer größeren Schichtdicke anzubringen als den Schaum 9.

Die Aufgabe des Schaums 9 bzw. 10, Aufprallenergie zu absorbieren, kann alternativ oder ergänzend natürlich auch von anderen Strukturen, z. B. einer stauchbaren Struktur aus Metall zwischen der Außenhaut 7 und dem Stoßfängerquerbalken 5 oder dem Hilfsträger 8 oder von der geeignet versteiften Außenhaut 7 wahrgenommen werden.

## Patentansprüche

1. Frontpartie für ein Kraftfahrzeug, mit einem Stoßfängerquerbalken (5) und einer in Bezug auf den Stoßfängerquerbalken (5) verformbaren Außenhaut (7), **dadurch gekennzeichnet, dass** im montierten Zustand, die Außenhaut (7) in einem oberhalb des Stoßfängerquerbalkens (5) und in Oberschenkelhöhe eines Fußgängers liegenden oberen Bereich einen höheren Verformungswiderstand aufweist als in einem in Höhe des Stoßfängerquerbalkens (5) liegenden unteren Bereich.

2. Frontpartie nach Anspruch 1, **dadurch gekennzeichnet, dass** die Außenhaut (7) wenigstens in dem oberen Bereich mit einem Schaum (9) hinterfüllt ist.

3. Frontpartie nach Anspruch 1, **dadurch gekennzeichnet, dass** der Schaum (9) ein Polypropylenschaum mit einer Dichte von 50 bis 80 g/l ist.

4. Frontpartie nach einem der vorhergehenden Ansprüche, **dadurch gekennzeichnet, dass** der obere Bereich eine Höhe von 66 cm einschließt.

5. Frontpartie nach einem der vorhergehenden Ansprüche, **dadurch gekennzeichnet, dass** die Außenhaut (7) in Höhe des oberen Bereiches an einem Hilfsträger (8) befestigt ist.

6. Frontpartie nach Anspruch 5, **dadurch gekennzeichnet, dass** der Hilfsträger (8) sich quer über die Frontpartie erstreckt.

7. Frontpartie nach Anspruch 6, **dadurch gekennzeichnet, dass** der Hilfsträger (8) in Fahrtrichtung über den Stoßfängerquerbalken (5) vorspringt.

8. Kraftfahrzeug, insbesondere Geländefahrzeug, mit einer Frontpartie nach einem der vorhergehenden Ansprüche.

## Claims

1. A front end for a motor vehicle, having a bumper crossbeam (5) and an external skin (7), which is deformable in relation to the bumper crossbeam (5), **characterized in that**, in the installed state, the external skin (7) has a higher deformation resistance in an upper region, which is located above the bumper crossbeam (5) and at thigh height of a pedestrian, than in a lower region, which is located at the height of the bumper crossbeam (5).

2. The front end according to Claim 1, **characterized in that** the external skin (7) is backfilled using a foam (9) at least in the upper region.

3. The front end according to Claim 1, **characterized in that** the foam (9) is a polypropylene foam having a density of 50 to 80 g/liter.

4. The front end according to any one of the preceding claims, **characterized in that** the upper region encloses a height of 66 cm.

5. The front end according to any one of the preceding claims, **characterized in that** the external skin (7) is fastened at the height of the upper region on an auxiliary girder (8).

6. The front end according to Claim 5, **characterized in that** the auxiliary girder (8) extends transversely over the front part.

7. The front end according to Claim 6, **characterized in that** the auxiliary girder (8) protrudes beyond the bumper crossbeam (5) in the travel direction.

8. A motor vehicle, in particular an off-road vehicle, having a front end according to any one of the preceding claims.

## Revendications

1. Partie avant pour un véhicule à moteur avec une barre pare-chocs (5) et une enveloppe extérieure (7) déformable par rapport à la barre pare-chocs (5), **caractérisée en ce que**, dans l'état monté, l'enveloppe extérieure (7) présente, dans une zone supérieure située au-dessus de la barre pare-chocs (5) et à la hauteur des cuisses d'un piéton, une résistance à la déformation plus élevée que dans une zone inférieure située au milieu de la barre pare-chocs (5).

2. Partie avant selon la revendication 1, **caractérisée en ce que** l'enveloppe extérieure (7) est doublée sur l'arrière, au moins dans la partie supérieure, avec une mousse (9).

3. Partie avant selon la revendication 1, **caractérisée en ce que** la mousse (9) est une mousse de polypropylène ayant une masse volumique de 50 à 80 g/l.

4. Partie avant selon l'une des revendications précédentes, **caractérisée en ce que** la partie supérieure représente une hauteur de 66 cm.

5. Partie avant selon l'une des revendications précédentes, **caractérisée en ce que** l'enveloppe extérieure (7) est fixée à la hauteur de la partie supérieure sur un support auxiliaire (8).

6. Partie avant selon la revendication 5, **caractérisée en ce que** le support auxiliaire (8) s'étend transversalement sur la partie avant.

7. Partie avant selon la revendication 6, **caractérisée en ce que** le support auxiliaire (8) dépasse dans le sens de la marche au-delà de la barre pare-chocs (5).

8. Véhicule à moteur, en particulier véhicule tout-terrain, avec une partie avant selon l'une des revendications précédentes.
